# EUROPEAN PATENT SPECIFICATION

(11) **EP 2 821 294 B1**
(45) Date of publication and mention of the grant of the patent: **06.09.2017**
(21) Application number: 14175183.4
(22) Date of filing: 01.07.2014
(51) Int. Cl.: B60R 22/22

(54) **Improvements in or relating to seat belt assemblies**
Verbesserungen an oder in Zusammenhang mit Sicherheitsgurtanordnungen
Améliorations apportées ou relatives à des ensembles de ceinture de sécurité

(30) Priority: 01.07.2013 GB 201311744
(43) Date of publication of application: 07.01.2015
(73) Proprietor: Nissan Motor Manufacturing (UK) Ltd., Cranfield Bedfordshire MK43 0DB (GB)
(72) Inventor: Calvo Polanco, Juan Carlos, Cranfield, Bedfordshire MK430DB (GB)

(56) References cited:
- WO-A1-2013/104386
- WO-A2-01/56832
- DE-U1-202004 001 993
- JP-A- 2002 362 306
- JP-A- 2010 247 785
- JP-U- H0 344 059
- JP-U- S6 211 055

## Description

### Field of the invention

The invention relates to seat belt assemblies and, in particular, to an anchor for anchoring seat belt webbing of a seat belt assembly to an interior surface of a vehicle.

### Background of the invention

Seat belt assemblies are a standard feature in most vehicles, and indeed their use is mandatory in automotive road vehicles for reasons of passenger safety. Many types of seat belt assemblies are known, for example, 2-point, sash, 3-point, Belt-in-Seat (BIS), and 4 to 7-point. Typically, a seat belt assembly includes at least one strap that can be wrapped around part of the user's body and a latch plate that latches the strap to a corresponding seat belt buckle thereby securing the strap around the user's body.

In order secure the seat belt assembly in the vehicle, ends of seat belts are tethered to appropriate interior surfaces of the vehicle. Taking a common arrangement of a seat belt buckle as an example, the buckle is attached to an anchor by a length of webbing or 'webbing strap' so that, when the anchor is fitted to the vehicle floor pan, the buckle protrudes through a pocket in the seat cushion so as to be accessible to occupants of the vehicle. For strength, the anchor is usually bolted directly to the floor pan and includes an elongated opening that receives a looped end of the webbing strap.

Known rear seat belt buckle anchors are disadvantageous for a number of reasons. They take up significant space under the seat cushions meaning that the rear seat cushions must be shaped to accommodate the anchors - this can lead to reduced cushioning for the passenger to sit on. Also, since several anchors are usually required across a rear seat assembly, the close proximity of neighbouring anchors can restrict access leading to installation difficulties. It is against this background that the invention has been devised.

Document JP 6211055, discloses an anchor for fixing a webbing according to the preamble of claim 1.

### Summary of the invention

According to the present invention there is provided an anchor for fixing webbing of a vehicle restraint system to an interior surface of a vehicle as defined in claim 1. The anchor integrates the functionality of a webbing anchor for a seat belt buckle with the functionality of a mounting bracket for a further fixture of a seat belt assembly, such as a further webbing strap or a further anchor. Only a single mechanical fastener is therefore required to mount two anchors to the vehicle floor in different orientations which reduces part count of the assembly and also improves the speed and ease of manufacture which is an important factor on a vehicle assembly line.

Although the flange portion may be coplanar to the fixing plate portion, in one embodiment the flange portion is integral with and inclined to the fixing plate portion. In such a configuration the flange portion, in effect, bends away from the floor pan to provide space for the webbing strap to wrap around the flange portion.

Although not essential, it is preferred that the first opening is elongate, in the form of a slot, so that the ribbon-like shape of the webbing is retained as it passes through the opening.

Turning to the mounting bracket, in one configuration the bracket extends away from the fixing plate portion adjacent to the flange portion. The flange portion therefore acts as the 'base' of the anchor with the flange and the mounting bracket extending away from the base generally side-by-side.

The mounting bracket is preferably angled relative to the fixing portion and in one embodiment extends at a much greater angle to the fixing portion compared to the flange portion. In order to enhance the accessibility of the mounting bracket to an installer when the anchor is mounted in-vehicle, in one configuration the mounting bracket is inclined at an angle of about 60 to 120 degrees, with 90 degrees currently being preferred. However, it should be appreciated that the exact angle is not critical and the angle may be varied depending on the required installation point of the anchor.

The mounting bracket may have a suitable fixture attached to it by a permanent method, for example by welding. However, to allow the fixture to be removable, the mounting bracket may include a lug having an opening that is cooperable with a mechanical fastener of the fixture.

To enhance the strength of the interface between the lug and the fixture, the opening may include a protruding boss that increases the possible thread depth of the opening. A bolt that is secured to the opening therefore has a substantial thread length with which to secure to the lug.

As an alternative to the bolt-receiving opening on the lug, to which a suitable fixture such as a further anchor may be secured, the lug may be provided with an elongate opening to which an alternative fixture, such as a webbing strap, may be secured without the need for an anchor.

As an enhancement, the mounting bracket may include stop means configured to limit the extent of rotation of the fixture when it is secured to the mounting bracket. For example, an anchor secured to the mounting bracket may be moved angularly when during installation or when the webbing is pulled to and fro by a user. The stop means is able to prevent the anchor from being moved too far.

In one embodiment, the stop means includes an interference or 'stop' member that prevents angular movement of the fixture when mounted to the lug, a preferred configuration being an elongate arm-like member that extends parallel to the lug but slightly out of plane, in the form of a dog-leg. The anchor will therefore strike the dog-legged portion of the arm if it is rotated too far.

The mounting bracket may further include support means that provides a support surface for a neighbouring component. For example, the support means may be in the form of a post or arm that extends in the same direction as, and as far or further than, the lug so that any nearby component will rest on the support arm instead of contacting the mounting bracket itself or the fixture mounted to it. This may be particularly useful in circumstances where the mounting bracket may be positioned so that the support arm is directly beneath a buckle since the support arm can be configured to support the buckle so as to prevent it being pushed below the line of the seat.

### Brief description of the drawings

For a more detailed understanding of the invention, it will now be described by way of example with reference to the following drawings in which:
Figure 1 is a perspective view of a seat assembly for a vehicle, particularly a car;
Figure 2 is a perspective view of a known seat belt buckle assembly that may be used in the seat assembly in Figure 1;
Figure 3 is an enlarged perspective view of an alternative anchor suitable for a seat belt buckle assembly;
Figure 4 is a perspective view of the anchor in Figure 3, but is shown here having attached to it a fixing bolt and a webbing strap;
Figure 5 is a perspective view of the anchor in Figure 3, but is shown here having attached to it a further anchor of a seat belt fixture; and
Figure 6 is a perspective view of the anchor from an alternative angle which demonstrates a feature of the anchor that limits rotation of the further anchor attached to it.

### Detailed description of the embodiments

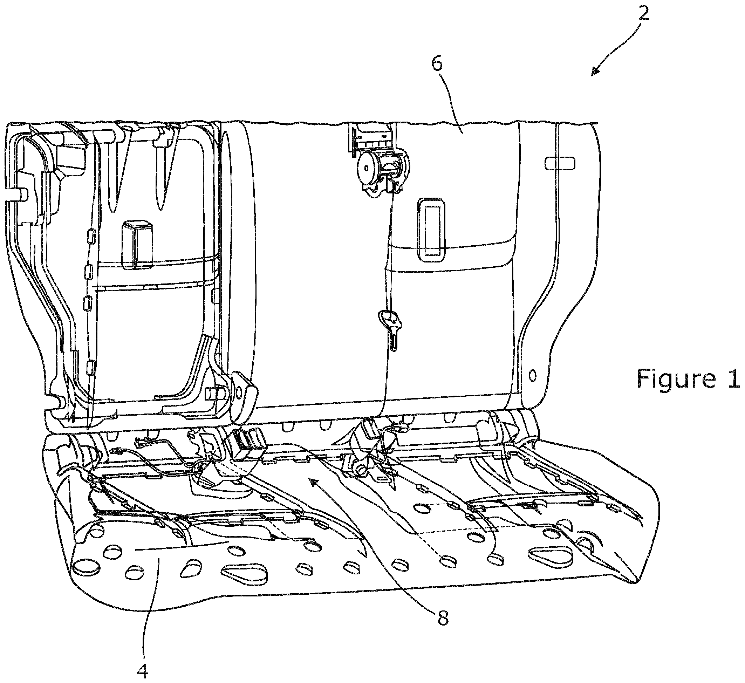

Figure 1 is a representation of a seat assembly 2 for a vehicle in which the invention may be installed. The seat assembly 2 has a particular use in automotive applications but may also be used in other applications, for example in marine applications and train rolling stock.

The seat assembly 2 includes a mounting platform 4 and a back rest cushion 6 that extends generally vertically or slightly inclined to vertical, from the mounting platform 4.
It should be appreciated that a seat cushion is not shown in Figure 1 so as not to obscure details of the mounting platform 4 and fixtures mounted on it, the fixtures being indicated generally at 8.

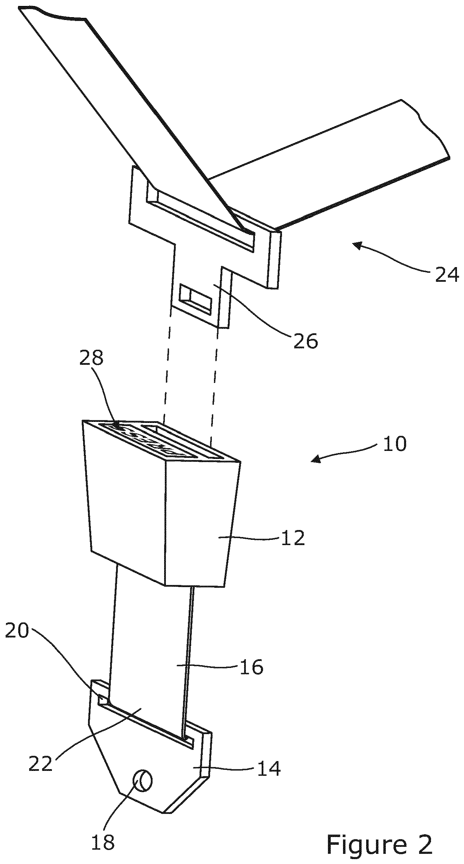

The mounting platform 4 may receive fixtures of various forms. A known fixture in the form of a seat belt buckle assembly 10 is shown in Figure 2. The seat belt buckle assembly 10 includes a seat belt buckle 12 that is attached to an anchor 14 by a webbing strap 16. As is known, the webbing strap is a ribbon-like length of woven fabric formed usually from nylon, polyester or polypropylene.

The anchor 14 includes a fixing eye 18 through which a bolt may pass in order to secure the anchor 14 to a surface of the vehicle, and a webbing slot 20 to which a looped end 22 of the webbing strap 16 is attached.

In use, the seat belt buckle assembly 10 cooperates with a restraint strap 24, also fabricated from the same or similar webbing material, which incorporates a latching plate 26 that is engageable into a clasp mechanism 28 of the buckle 12. Further anchors may be provided to secure the restraint strap 24 to an appropriate surface of a vehicle, like that of the anchor 14 of the seat belt buckle assembly 10. Together, the seat belt buckle assembly 10 and the restraint strap 24 make up the seat belt assembly of the vehicle, and the restraint strap 24 is illustrated here to provide context to the seat belt buckle assembly 10.

In a rear seat of a typical multi-passenger vehicle there will usually be numerous fixtures, such as seat belt buckle assemblies 10 and restraint strap anchors that need to be tethered to a mounting surface under the seat cushions, for example the vehicle floor pan. The mounting surface can therefore become crowded with anchor points which can cause difficulties during vehicle assembly and can limit the orientation that anchors can be mounted to the mounting surface.

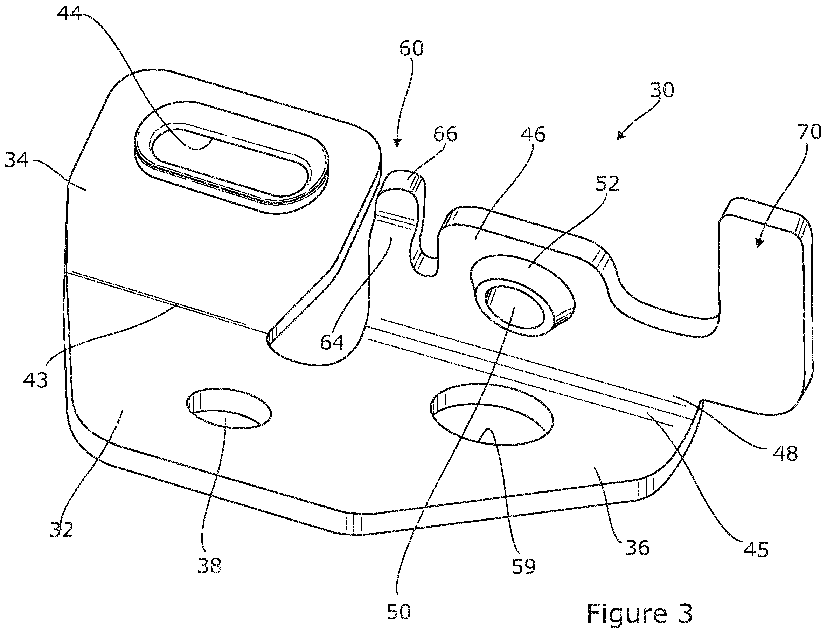

With the aim of mitigating these drawbacks, an improved anchor 30 suitable for a seat belt buckle assembly is illustrated from different viewpoints in Figures 3 to 6. In a broad sense, the anchor 30 integrates the known functionality of an anchor, namely to tether a webbing strap to a surface of a vehicle, with the facility to mount a further fixture to the anchor 30. Therefore the anchor 30 enables more than one fixture to be mounted to a mounting surface using a single metal fastener such as a bolt.

In more detail, the anchor 30 is a one-piece or 'unitary' device incorporating a base portion 32, an anchoring flange portion 34 and a mounting bracket 36. For suitable strength properties it is envisaged that the anchor 30 will be fabricated from sheet metal, e.g. steel or a related alloy, which has been stamped into the desired form with a suitably configured cutting die. High strength is an important factor since the anchor 30 needs to withstand high forces that may occur during a vehicle crash event, so a metallic material such as steel provides the appropriate strength characteristics whilst also being cost effective to produce. However, it should be noted that although metal is currently preferred for these reasons, other materials may also be used, for example suitable engineering plastics such as nylon or polycarbonate.

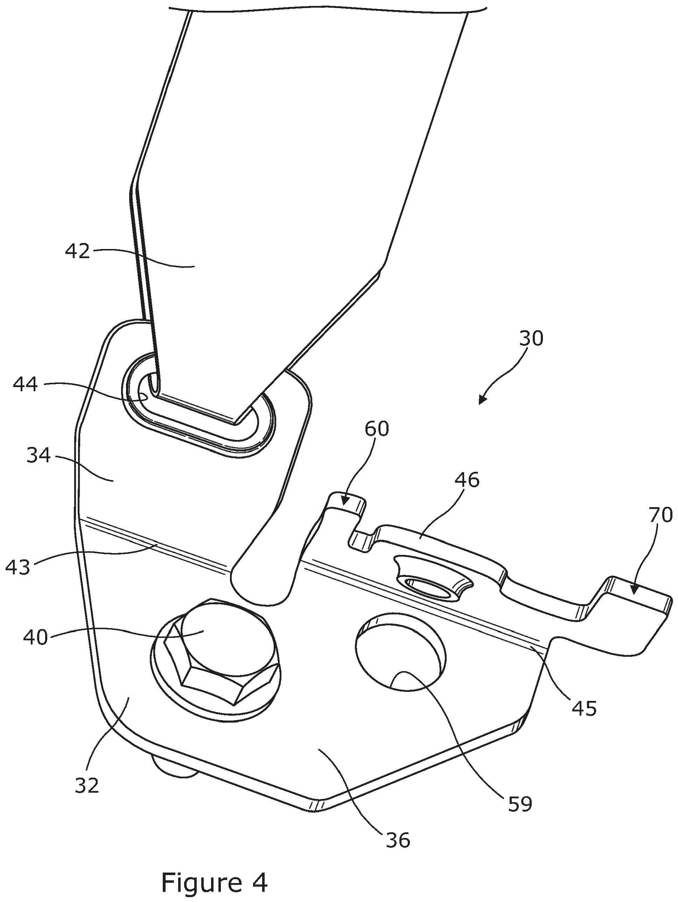

The base portion 32 is planar and generally U-shaped and its 'arms' blend into the flange portion 34 and the mounting bracket 36, respectively. In this specific embodiment, the base portion serves as a fixing plate to secure the anchor 30 to an appropriate surface and so is provided with a fixing aperture 38 for this purpose. The fixing aperture 38 is shaped to receive a bolt, rivet or other mechanical fastener, indicated in Figure 4 as 40, to secure the base portion 32. Mechanical fastening of the base portion 32 using a bolt 40 is currently preferred although the skilled person will appreciate that the base portion 32 could also be affixed by suitable bonding techniques such as welding or a high-strength structural adhesive depending on the specific application in which the anchor is intended to be used.
The flange portion 34 is generally rectangular in form and extends away from the base portion 32 to form a securing point for a webbing strap. Figure 4 shows a webbing strap 42 secured to a fixing eye 44 in the form of an elongate aperture that is shaped for receiving the ribbon-like form of the webbing strap 42. Here, the flange portion 34 is inclined slightly with respect to the base portion 32 about a fold line 43 so as to allow some clearance between the attached webbing strap 42 and the adjacent mounting surface when *in situ.* A shallow angle of inclination of between 10 and 60 degrees is considered to be sufficient, with around 50 degrees being currently preferred.

The mounting bracket 36 also extends away from the base portion 32 and is arranged next to the flange portion 34 in a side-by-side relationship. However, the mounting bracket 36 is angled sharply with respect to the base portion 32 about a further fold line 45 which is substantially parallel to, but spaced away from, the first fold line 43. In this embodiment, the mounting bracket 36 extends at right angles to the base portion 32, although it should be appreciated that the precise angle is not critical and it may be selected to as to optimise the angle-of-access required for tools to engage the mounting bracket 34 during vehicle assembly. Currently preferred is for the mounting bracket 36 to be at an angle of between about 60 and 160 degrees with respect to the base portion 32, although the embodiment shown here is angled at approximately 120 degrees.

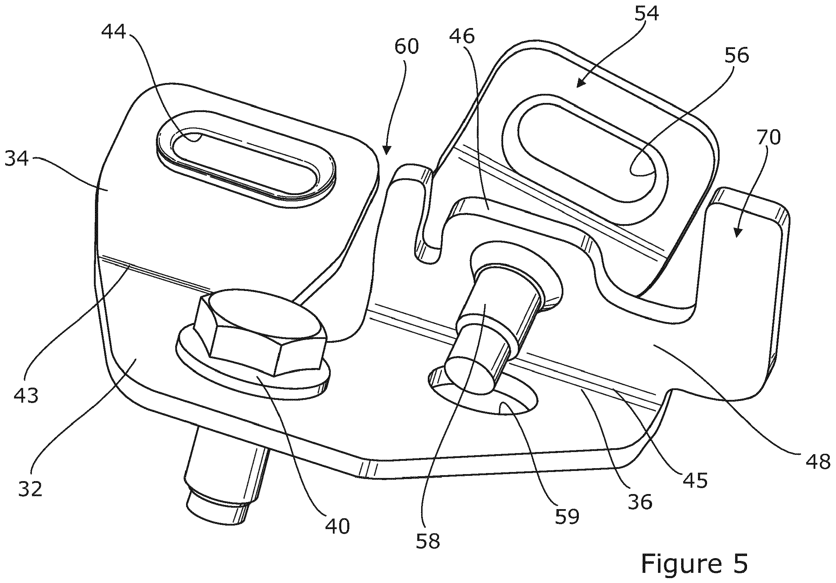

The mounting bracket 36 is also generally planar and includes a centrally located lug 46 defining a fixing hole 50 at its centre. A boss 52 encircles the fixing hole 50 and deepens it so as to provide a greater internal thread length. In this way a further anchor 54 may be secured to the mounting bracket 36 by way of an externally threaded bolt 58, as is shown in Figure 5. The further anchor 54 may form part of a seat belt assembly 10 as described above with respect to Figure 2 and so is shown here as being provided with an elongated slot-like aperture 56 for receiving a webbing strap (not shown in Figure 5). To provide sufficient clearance for the tip of the bolt 58, the base portion 32 is provided with an aperture 59 so avoid the tip of the bolt 58 striking the base portion during assembly. The aperture 59 can be formed easily in the base portion 32 by drilling, but a similar result could be achieved by a depression or shallow recess in the base portion 32 without fully penetrating it. Of course, the aperture 59 may be omitted if the length of the bolt 58 permits.

From the above discussion, it will be appreciated that the anchor 30 beneficially incorporates a mounting bracket 36 for the further anchor 54 and so both anchors 30,54 may be secured to a surface of the vehicle using the single bolt 40. This improves assembly speed and also reduces part count, thereby reducing cost, complexity and weight. Furthermore, the angled mounting bracket 36 provides a different orientation for mounting of the further anchor 54 which can improve assembly access for installation personnel.

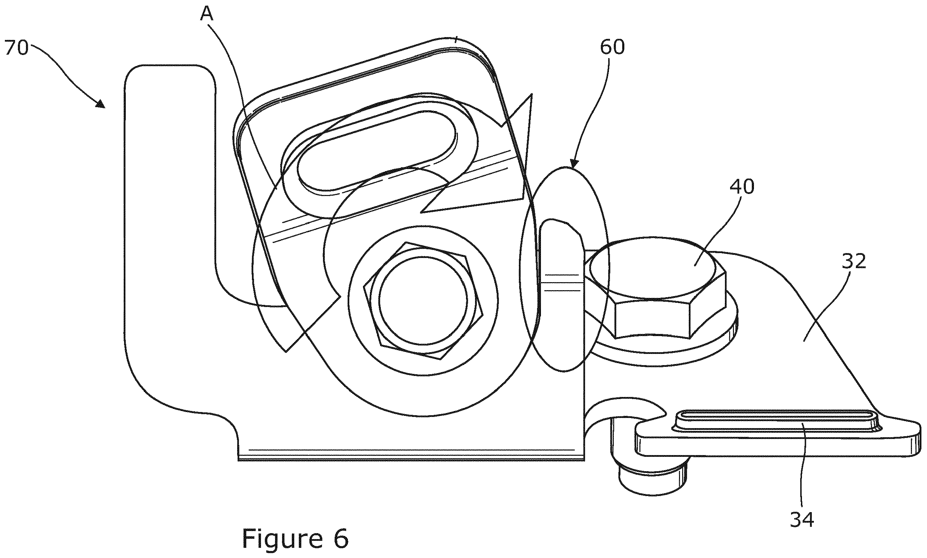

Since the further anchor 54 is bolted to the mounting bracket 36, it is possible that the further anchor 54 may be caused to move angularly about its mounting bolt 58, for example during assembly as the mounting bolt 58 is tightened, or during use as the seat belt is moved by occupants of the vehicle. In order to limit the range of angular movement of the further anchor 54, the mounting bracket 36 includes stop means 60. In this embodiment the stop means 60 takes the form of an arm-like stop member that extends in parallel to the lug 46. The stop member is dog-legged in form and includes a base portion 64 that is co-planar with the lug 46 and a tip portion 66 that protrudes out of plane. Since the tip portion 66 protrudes from the plane of the lug 46 it will interfere with the further anchor 54 as it is moved angularly on the mounting bracket 36 - this is shown in Figure 6 by the arrow 'A'.

The mounting bracket 36 further comprises support means, indicated generally at 70, for providing a supporting structure for a further component when the mounting bracket is *in situ.* In this embodiment, the support means 70 is in the form of an elongated post 72 that extends from a root 48 of the mounting bracket 36 co-planar and in parallel with the lug 46. As is shown particularly clearly in Figure 6, the post 70 extends in a direction and for a length such that it protrudes to a similar height as the further anchor 54. In this manner, therefore, the post 70 acts as a guard to prevent objects from interfering with the further anchor 54. Mainly, however, due to the location of the mounting bracket 36 underneath a seat assembly in a vehicle, the post 70 may act to support a seat belt buckle in its mounted position to guard against the seat belt buckle 30 being pushed into the area underneath the seat assembly.

Where appropriate, variants of the anchor 30 have been described above. However, the skilled person will appreciate that other modifications may be made to the specific embodiments without departing from the scope of the invention as defined by the claims.

## Claims

1. An anchor (30) for fixing webbing of a vehicle restraint system to an interior surface of a vehicle, the anchor (30) comprising a base portion (32) and a flange portion (34) defining a first opening (44) for receiving a webbing strap (42), wherein; the anchor includes a mounting bracket (36) for attachment of a seat belt fixture, wherein the flange portion (34) is integral with and inclined to the base portion (32);
the mounting bracket (36) extends away from the base portion (32) adjacent the flange portion (34), and the mounting bracket (36) is inclined with respect to the base portion (32), and extending in a greater angle to the base portion than the flange portion; **characterised in that**; the mounting bracket (36) further includes stop means (60) to limit angular movement of the seat belt fixture when attached to the mounting bracket (36).

2. The anchor of claim 1, wherein the first opening is elongate so as to receive a webbing strap.

3. The anchor of claim 2, wherein the mounting bracket is inclined relative to the base portion at an angle between 60 and 160 degrees.

4. The anchor (30) of claim 3, wherein the mounting bracket (36) is inclined relative to the base portion (32) at an angle of 120 degrees.

5. The anchor of claim 3, wherein the mounting bracket (36) is substantially perpendicular to the base portion (32).

6. The anchor (30) of any of the preceding claims, wherein the mounting bracket (36) includes a lug (46) adapted to mate with a seat belt fixture.

7. The anchor (30) of claim 6, wherein the lug (46) includes a second opening (50) cooperable with a mechanical fastener of the seat belt fixture.

8. The anchor of claim 7, wherein the second opening (50) includes a protruding boss (52) thereby strengthening the engagement between the mechanical fastener and the mounting flange.

9. The anchor (30) of any of claims 6 to 8, wherein the lug (46) includes a second opening (56) that is elongate so as to receive a ribbon-like webbing.

10. The anchor of claim 9, wherein the stop means includes an interference member (66) that prevents angular movement of the fixture when mounted to the lug.

11. The anchor of claim 10, wherein the lug (46) is generally planar and wherein the interference member tip portion (66) extends out-of-plane of the lug.

12. The anchor of claim 11, wherein the interference member (64) is an arm that is spaced from but extends generally parallel to the lug.

13. The anchor of any of the preceding claims, wherein the mounting bracket includes support means (70) to provide a supporting surface.

14. The anchor of claim 13, wherein the support means (70) is a post member that extends generally parallel to the lug (46).

## Patentansprüche

1. Verankerung (30) zum Fixieren eines Gurtbands eines Fahrzeugrückhaltesystems an einer Innenoberfläche eines Fahrzeugs, wobei die Verankerung (30) einen Basisabschnitt (32) und einen Flanschabschnitt (34), der eine erste Öffnung (44) zum Aufnehmen eines Gurtbands (42) definiert, umfasst, wobei
die Verankerung eine Befestigungshalterung (36) zum Befestigen einer Sitzgurtfixierung enthält, wobei
der Flanschabschnitt (34) mit dem Basisabschnitt (32) einstückig ausgebildet und zu diesem hin geneigt ist;
die Befestigungshalterung (36) sich von dem Basisabschnitt (32) neben dem Flanschabschnitt (34) weg erstreckt und die Befestigungshalterung (36) mit Bezug auf den Basisabschnitt (32) geneigt ist und sich mit einem größeren Winkel zu dem Basisabschnitt hin erstreckt als der Flanschabschnitt;
**dadurch gekennzeichnet, dass**
die Befestigungshalterung (36) ferner Anschlagmittel (60) umfasst, um die Winkelbewegung der Sitzgurtbefestigung einzuschränken, wenn an der Befestigungshalterung (36) befestigt.

2. Verankerung nach Anspruch 1, wobei die erste Öffnung länglich ist, um ein Gurtband aufzunehmen.

3. Verankerung nach Anspruch 2, wobei die Befestigungshalterung in einem Winkel von zwischen 60 und 160 Grad relativ zu dem Basisabschnitt geneigt ist.

4. Verankerung (30) nach Anspruch 3, wobei die Befestigungshalterung (36) in einem Winkel 120 Grad relativ zu dem Basisabschnitt (32) geneigt ist.

5. Verankerung nach Anspruch 3, wobei die Befestigungshalterung (36) im Wesentlichen senkrecht zu dem Basisabschnitt (32) ist.

6. Verankerung (30) nach einem der vorhergehenden Ansprüche, wobei die Befestigungshalterung (36) eine Öse (46) enthält, die angepasst ist, mit einer Sitzgurtbefestigung zusammenzupassen.

7. Verankerung (30) nach Anspruch 6, wobei die Öse (46) eine zweite Öffnung (50) enthält, die mit einem mechanischen Befestigungselement der Sitzgurtbefestigung zusammenwirken kann.

8. Verankerung nach Anspruch 7, wobei die zweite Öffnung (50) eine vorstehende Nabe (52) aufweist, durch die der Eingriff zwischen dem mechanischen Befestigungselement und dem Einbauflansch verstärkt wird.

9. Verankerung (30) nach einem der Ansprüche 6 bis 8, wobei die Öse (46) eine zweite Öffnung (56) enthält, die länglich ist, um einen bandförmigen Gurt aufzunehmen.

10. Verankerung nach Anspruch 9, wobei das Anschlagmittel ein Eingriffelement (66) enthält, das eine Winkelbewegung der Befestigung verhindert, wenn in der Öse eingebaut.

11. Verankerung nach Anspruch 10, wobei die Öse (46) allgemein eben ist und wobei der Spitzenabschnitt des Eingriffelements (66) sich aus der Ebene der Lasche heraus erstreckt.

12. Verankerung nach Anspruch 11, wobei das Eingriffelement (64) ein Arm ist, der von der Lasche beabstandet ist, aber sich allgemein parallel dazu erstreckt.

13. Verankerung nach einem der vorhergehenden Ansprüche, wobei die Befestigungshalterung Stützmittel (70) enthält, um eine Stützoberfläche bereitzustellen.

14. Verankerung nach Anspruch 13, wobei das Stützmittel (70) ein Pfostenelement ist, das sich allgemein parallel zu der Öse (46) erstreckt.

## Revendications

1. Ancrage (30) pour fixer une sangle d'un système de retenue de véhicule à une surface intérieure d'un véhicule, l'ancrage (30) comprenant une portion de base (32) et une portion de bride (34) définissant une première ouverture (44) pour recevoir une bande de sangle (42), dans lequel :
l'ancrage comporte un support de montage (36) pour l'attache d'un dispositif de fixation de ceinture de sécurité, dans lequel
la portion de bride (34) est d'un seul tenant avec et est inclinée par rapport à la portion de base (32) ;
le support de montage (36) s'étend dans le prolongement de la portion de base (32) adjacente à la portion de bride (34), et le support de montage (36) est incliné par rapport à la portion de base (32), et s'étend sur un angle plus grand par rapport à la portion de base que la portion de bride ;
**caractérisé en ce que** ;
le support de montage (36) comporte en outre un moyen de butée (60) pour limiter le déplacement angulaire du dispositif de fixation de ceinture de sécurité lorsqu'il est attaché au support de montage (36).

2. Ancrage selon la revendication 1, dans lequel la première ouverture est allongée de façon à recevoir une bande de sangle.

3. Ancrage selon la revendication 2, dans lequel le support de montage est incliné par rapport à la portion de base selon un angle entre 60 et 160 degrés.

4. Ancrage (30) selon la revendication 3, dans lequel le support de montage (36) est incliné par rapport à la portion de base (32) selon un angle de 120 degrés.

5. Ancrage selon la revendication 3, dans lequel le support de montage (36) est sensiblement perpendiculaire à la portion de base (32).

6. Ancrage (30) selon l'une quelconque des revendications précédentes, dans lequel le support de montage (36) comporte un ergot (46) adapté pour s'accoupler à un dispositif de fixation de ceinture de sécurité.

7. Ancrage (30) selon la revendication 6, dans lequel l'ergot (46) comporte une seconde ouverture (50) co-exploitable avec une attache mécanique du dispositif de fixation de ceinture de sécurité.

8. Ancrage selon la revendication 7, dans lequel la seconde ouverture (50) comporte un bossage en saillie (52), renforçant ainsi l'engagement entre l'attache mécanique et la bride de montage.

9. Ancrage (30) selon l'une quelconque des revendications 6 à 8, dans lequel l'ergot (46) comporte une seconde ouverture (56) qui est allongée de façon à recevoir une sangle en forme de ruban.

10. Ancrage selon la revendication 9, dans lequel le moyen de butée comporte un organe d'interférence (66) qui empêche le déplacement angulaire du dispositif de fixation lorsqu'il est monté sur l'ergot.

11. Ancrage selon la revendication 10, dans lequel l'ergot (46) est généralement plan et dans lequel la portion de bout d'organe d'interférence (66) s'étend hors du plan de l'ergot.

12. Ancrage selon la revendication 11, dans lequel l'organe d'interférence (64) est un bras qui est espacé de l'ergot mais qui s'étend généralement parallèlement à celui-ci.

13. Ancrage selon l'une quelconque des revendications précédentes, dans lequel le support de montage comporte un moyen de soutien (70) pour fournir une surface de soutien.

14. Ancrage selon la revendication 13, dans lequel le moyen de soutien (70) est un organe de montant qui s'étend généralement parallèlement à l'ergot (46).
